# EUROPÄISCHE PATENTANMELDUNG

(11) **EP 3 553 291 A1**
(43) Veröffentlichungstag der Anmeldung: **16.10.2019**
(21) Anmeldenummer: 19164794.0
(22) Anmeldetag: 25.03.2019
(51) Int. Cl.: F02B 7/06, F02M 45/02, F02D 41/40, F02B 43/00, F02M 21/00, F02D 19/06, F02D 19/08, F02D 19/10

(54) **VERFAHREN UND STEUERUNGSEINRICHTUNG ZUM BETREIBEN EINES DUAL-FUEL-MOTORS**

(30) Priorität: 12.04.2018 DE 102018108715
(71) Anmelder: MAN Energy Solutions SE, 86153 Augsburg (DE)
(72) Erfinder: Hagl, Paul, 86450 Altenmünster (DE); Kunkel, Christian, 86161 Augsburg (DE)

(57) **Zusammenfassung**

Verfahren zum Betreiben eines als Dual-Fuel-Motor ausgebildeten Motors, der mehrere Zylinder (2) umfasst, wobei in einem Flüssigkraftstoffbetriebsmodus ein flüssiger Kraftstoff wie Diesel in einen Brennraum (9) des jeweiligen Zylinders (2) eingebracht wird, wobei in einem Gaskraftstoffbetriebsmodus ein Gas/LuftGemisch aus einem gasförmigen Kraftstoff und Luft und zur Zündung des Gas/Luft-Gemischs ein Zündfluid in den Brennraum (9) des jeweiligen Zylinders (2) eingebracht wird, und wobei in dem Gaskraftstoffbetriebsmodus im Bereich jedes Zylinders (2) in einem Arbeitstakt desselben zuerst der gasförmige Kraftstoff und die Luft des Gas/Luft-Gemischs und anschließend das Zündfluid in den jeweiligen Zylinder (2) in mindestens zwei aufeinanderfolgenden Einspritzungen in den Brennraum (9) des jeweiligen Zylinders (2) eingebracht wird. Im Bereich jedes Zylinders (2) wird in dem Flüssigkraftstoffbetriebsmodus der flüssige Kraftstoff und in dem Gaskraftstoffbetriebsmodus das Zündfluid über denselben Kraftstoffinjektor (6) des jeweiligen Zylinders (2) in den Brennraum (9) des jeweiligen Zylinders (2) eingebracht.

## Beschreibung

Die Erfindung betrifft ein Verfahren zum Betreiben eines Dual-Fuel-Motors.

Aus der Praxis sind sogenannte Dual-Fuel-Motoren bekannt, in denen einerseits in einem Flüssigkraftstoffbetriebsmodus ein flüssiger Kraftstoff wie Diesel und andererseits in einem Gaskraftstoffbetriebsmodus ein gasförmiger Kraftstoff wie Erdgas verbrannt werden kann. Im Gaskraftstoffbetriebsmodus eines solchen Dual-Fuel-Motors wird in der Regel ein mageres Gas/Luft-Gemisch in die Zylinder des Motors eingebracht und durch die Zündenergie eines ebenfalls in die Zylinder eingebrachten Zündfluids gezündet. So verfügt ein Dual-Fuel-Motor über ein Haupt-Einspritzsystem und ein Zündfluid-Einspritzsystem. Das Haupt-Einspritzsystem dient der Einbringung des flüssigen Kraftstoffs in den Brennraum des jeweiligen Zylinders im Flüssigkraftstoffbetriebsmodus. Das Zündfluid-Einspritzsystem dient der Einbringung des Zündfluids in den Brennraum des jeweiligen Zylinders im Gaskraftstoffbetriebsmodus, wobei das Zündfluid-Einspritzsystem eine für mehrere Zylinder gemeinsame Zündfluid-Förderpumpe, einen für die mehreren Zylinder gemeinsamen Zündfluid-Speicher und für die mehreren Zylinder individuelle Zündfluid-Injektoren umfasst. Das Zündfluid wird dabei nach der Praxis in den jeweiligen Zylinder kurz vor einem sogenannten oberen Totpunkt eines Kolbens des jeweiligen Zylinders in den Brennraum des jeweiligen Zylinders eingebracht, und zwar in bzw. mit einer einzigen Einspritzung je Arbeitstakt des jeweiligen Zylinders.

Aus der DE 10 2014 017 124 A1 ist es bekannt, dass im Gaskraftstoffbetriebsmodus das Zündfluid in den jeweiligen Zylinder in mindestens zwei aufeinanderfolgenden Einspritzungen in den Brennraum des jeweiligen Zylinders eingebracht wird, nämlich über das Zündfluid-Einspritzsystem.

Hiervon ausgehend liegt der Erfindung die Aufgabe zu Grunde, ein neuartiges Verfahren und eine Steuerungseinrichtung zum Betreiben eines Dual-Fuel-Motors zu schaffen, um einen Dual-Fuel-Motor noch effizienter betreiben zu können.

Diese Aufgabe wird durch ein Verfahren zum Betreiben eines Dual-Fuel-Motors gemäß Anspruch 1 gelöst.

Erfindungsgemäß wird im Bereich jedes Zylinders in dem Flüssigkraftstoffbetriebsmodus der flüssige Kraftstoff und in dem Gaskraftstoffbetriebsmodus das Zündfluid über denselben Kraftstoffinjektor des jeweiligen Zylinders in den Brennraum des jeweiligen Zylinders eingebracht.

Es wird auf ein separates Zündfluid-Einspritzsystem verzichtet. Das Einbringen des Zündfluids in den mindestens zwei aufeinanderfolgenden Einspritzungen erfolgt über denselben Kraftstoffinjektor, der im Flüssigkraftstoffbetriebsmodus dem Einbringen des Flüssigkraftstoffs dient. Hierdurch kann ein Dual-Fuel-Motors effizienter betrieben werden.

Nach einer vorteilhaften Weiterbildung der Erfindung wird in dem Flüssigkraftstoffbetriebsmodus des Dual-Fuel-Motors in dem jeweiligen Arbeitstakt des jeweiligen Zylinders bei Volllast des Dual-Fuel-Motors über den Kraftstoffinjektor des jeweiligen Zylinders eine Menge von 100% flüssigem Kraftstoff in den Brennraum des jeweiligen Zylinders eingebracht, wobei in dem Gaskraftstoffbetriebsmodus in dem jeweiligen Arbeitstakt des jeweiligen Zylinders über den Kraftstoffinjektor des jeweiligen Zylinders eine Menge von 0,7%-3%, bevorzugt eine Menge von 1,5%-2,5%, besonders bevorzugt eine Menge von 1,5%-2,0%, flüssigem Kraftstoff als Zündfluid in den Brennraum des jeweiligen Zylinders eingebracht wird. Hierdurch kann ein Dual-Fuel-Motors besonders effizient betrieben werden.

Nach einer vorteilhaften Weiterbildung wird in dem jeweiligen Arbeitstakt des jeweiligen Zylinders das Zündfluid in einer ersten Einspritzung mit einem ersten Einspritzbeginn, der in einem Kurbelwellenwinkelbereich zwischen 180°KW vor OT und 60°KW vor OT liegt, in den jeweiligen Zylinder eingebracht. In dem jeweiligen Arbeitstakt des jeweiligen Zylinders wird das Zündfluid in einer zweiten Einspritzung mit einem zweiten Einspritzbeginn, der in einem Kurbelwellenwinkelbereich zwischen 40°KW vor OT und 10°KW vor OT liegt, in den jeweiligen Zylinder eingebracht, wobei der zweite Einspritzbeginn der zweiten Einspritzung nach einem ersten Einspritzende der ersten Einspritzung liegt. Hiermit kann die Verbrennung des Gas/Luft-Gemischs in dem jeweiligen Zylinder des Motors weiter verbessert und damit der Dual-Fuel-Motor noch effizienter betrieben werden.

Die Steuerungseinrichtung zur Durchführung des Verfahrens ist in Anspruch 7 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

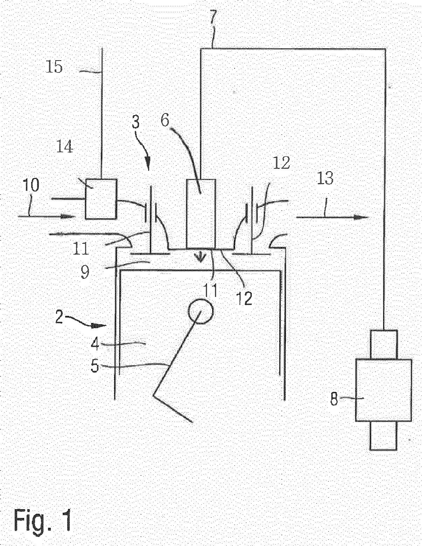

- Fig. 1: ein Blockschaltbild eines als Dual-Fuel-Motor ausgebildeten Motors.

In Fig. 1 sind Baugruppen eines Dual-Fuel-Motors gezeigt, wobei Fig. 1 einen Zylinder 2 eines solchen Motors zeigt.

Der Zylinder 2 verfügt über einen Zylinderkopf 3. Im Zylinder 2 bewegt sich ein Kolben 4, der von einem Pleuel 5 geführt ist, auf und ab.

Im Zylinderkopf 3 ist ein Kraftstoffinjektor 6 befestigt, durch den im Flüssigkraftstoffbetriebsmodus flüssiger Kraftstoff, insbesondere Dieselkraftstoff, über eine Kraftstoffleitung 7 von einer Kraftstoffpumpe 8 aus in einen Brennraum 9 des Zylinders 2 eingespritzt werden kann.

Die Kraftstoffpumpe 8 wird dabei vorzugsweise ausgehend von einer Kurbelwelle des Motors angetrieben. Der Kraftstoffinjektor 6, die Kraftstoffleitung 7 sowie die Kraftstoffpumpe 8 sind Elemente einer Kraftstoffzuführeinrichtung, die im Flüssigkraftstoffbetriebsmodus der Zuführung von flüssigem Kraftstoff in den Brennraum 9 des Zylinders 2 dient.

Zur Verbrennung des flüssigen Kraftstoffs ist in den jeweiligen Zylinder 2 des Dual-Fuel-Motors weiter Ladeluft 10 über ein Einlassventil 11 einbringbar, wobei bei der Verbrennung des Kraftstoffs entstehendes Abgas 13 über ein Auslassventil 12 vom Zylinder 2 abgeführt werden kann.

Im Brennraum 9 des Zylinders 2 des Dual-Fuel-Motors kann in einem Gaskraftstoffbetriebsmodus als Kraftstoff auch Gas verbrannt werden. Hierzu umfasst der Dual-Fuel-Motor eine Gemischbildungseinheit 14, in der ein Gemisch aus Verbrennungsluft 10 und Gas, welches der Gemischbildungseinheit 14 über eine Gasversorgungsleitung 15 bereitgestellt wird, gebildet wird, wobei dieses Gas-Luft-Gemisch in den Brennraum 9 des Zylinders 2 über das Einlassventil 11 eingebracht wird. Auch bei der Verbrennung von Gas entsteht Abgas 13, welches über das Auslassventil 12 vom Zylinder 2 abgeführt werden kann.

Zur Zündung des Gas-Luft-Gemischs im Gaskraftstoffbetriebsmodus des Zylinders 2 des Dual-Fuel-Motors dient Zündfluid, welches in den Brennraum 9 des Zylinders 2 eingebracht werden kann, nämlich über denselben Kraftstoffinjektor 6, der im Flüssigkraftstoffbetriebsmodus dem Einbringen des flüssigen Kraftstoff in den Brennraum 9 des Zylinders 2 dient. Als Zündfluid dient flüssiger Kraftstoff.

Im Gaskraftstoffbetriebsmodus des Dual-Fuel-Motors wird in jedem Arbeitstakt eines Zylinders 2 in den Brennraum 9 des jeweiligen Zylinders 2 zunächst das Gas/Luft-Gemisch eingebracht. Anschließend wird das Zündfluid in den jeweiligen Zylinder 2 eingebracht, nämlich über den denselben Kraftstoffinjektor 6, der im Flüssigkraftstoffbetriebsmodus dem Einbringen des flüssigen Kraftstoff in den Brennraum 9 des Zylinders 2 dient. Dabei wird das Zündfluid je Arbeitstakt des jeweiligen Zylinders 2 in mindestens zwei aufeinanderfolgenden Einspritzungen in den jeweiligen Zylinder 2 eingebracht.

In dem jeweiligen Arbeitstakt des jeweiligen Zylinders 2 wird das Zündfluid in einer ersten Einspritzung mit einem ersten Einspritzbeginn, der in einem Kurbelwellenwinkelbereich zwischen 180°KW vor OT und 60°KW vor OT liegt, in den jeweiligen Zylinder 2 eingebracht. Der erste Einspritzbeginn liegt vorzugsweise in dem Bereich 120°±10° KW vor OT. In dem jeweiligen Arbeitstakt des jeweiligen Zylinders 2 wird das Zündfluid darauffolgend in einer zweiten Einspritzung mit einem zweiten Einspritzbeginn, der in einem Kurbelwellenwinkelbereich zwischen 40°KW vor OT und 10°KW vor OT liegt, in den jeweiligen Zylinder 2 eingebracht, wobei der zweite Einspritzbeginn der zweiten Zündfluid-Einspritzung liegt nach einem ersten Einspritzende der ersten Zündfluid-Einspritzung liegt. Der zweite Einspritzbeginn liegt vorzugsweise in dem Bereich 25°±5° KW vor OT.

Zwischen dem Einspritzbeginn und dem Einspritzende einer Zündfluid-Einspritzung vergehen bzw. liegen typischerweise 4°KW bis 8°KW. Eine Zündfluid-Einspritzung, die bei 150°KW vor OT beginnt, endet demnach typischerweise zwischen 146°KW vor OT und 142°KW vor OT.

Im Flüssigkraftstoffbetriebsmodus wird in dem jeweiligen Arbeitstakt des jeweiligen Zylinders 2 bei Volllast des Motors über den Kraftstoffinjektor 6 des jeweiligen Zylinders 2 eine Menge von 100% flüssigem Kraftstoff in den Brennraum 9 des jeweiligen Zylinders 2 eingebracht.

Im Gaskraftstoffbetriebsmodus wird in dem jeweiligen Arbeitstakt des jeweiligen Zylinders 2 über den Kraftstoffinjektor 6 des jeweiligen Zylinders 2 eine Menge von 1,5%-3%, bevorzugt eine Menge von 1,5%-2,5%, besonders bevorzugt eine Menge von 1,5%-2,0%, flüssiger Kraftstoff als Zündfluid in den Brennraum 3 des jeweiligen Zylinders 2 eingebracht.

Eine Einspritzmenge an Zündfluid in dem jeweiligen Arbeitstakt des jeweiligen Zylinders 2 wird vorzugsweise derart zwischen den Zündfluid-Einspritzungen, nämlich zwischen der ersten Einspritzung für das Zündfluid und der zweiten Einspritzung für das Zündfluid, verteilt bzw. aufgeteilt, dass bei der ersten Zündfluid-Einspritzung zwischen 70% und 40% und bei der zweiten Zündfluid-Einspritzung zwischen 30% und 60% der Gesamteinspritzmenge an Zündfluid für den jeweiligen Arbeitstakt in den jeweiligen Zylinder 2 eingebracht wird.

Dann, wenn die Aufteilung bei 50% zu 50% liegt, werden in der ersten Einspritzung und in der zweiten Einspritzung jeweils 0,75%-1,5%, bevorzugt eine Menge von 0,75%-1,25%, besonders bevorzugt eine Menge von 0,75%-1,0%, flüssiger Kraftstoff als Zündfluid in den Brennraum 3 des jeweiligen Zylinders 2 eingebracht, und zwar bezogen auf die 100% Menge desflüssigen Kraftstoffs, die bei Volllast des Motors über den Kraftstoffinjektor 6 des jeweiligen Zylinders 2 in den Brennraum 9 des jeweiligen Zylinders 2 eingebracht wird.

Zwischen der ersten Einspritzung des Zündfluids und der zweiten Einspritzung des Zündfluids und nach der zweiten Einspritzung des Zündfluids erfolgt je Arbeitstakt vorzugsweise keine weitere Einspritzung an Zündfluid. Je Arbeitstakt wird das Zündfluid über vorzugsweise zwei Einspritzung in den Brennraum 9 des jeweiligen Zylinders 2 eingebracht.

Die Erfindung betrifft weiterhin eine Steuerungseinrichtung eines Motors zur Durchführung des erfindungsgemäßen Verfahrens.

Bei der Steuerungseinrichtung handelt es sich vorzugsweise um ein Motorsteuergerät. Dasselbe umfasst Mittel zur Durchführung des Verfahrens, wobei es sich bei diesen Mitteln um hardwareseitige Mittel und um softwareseitige Mittel handelt. Die hardwareseitigen Mittel umfassen Datenschnittstellen, um mit den an der Durchführung des erfindungsgemäßen Verfahrens beteiligten Baugruppen Daten auszutauschen. Weiterhin umfassen die hardwareseitigen Mittel einen Speicher zur Datenspeicherung und einen Prozessor zur Datenverarbeitung. Bei softwareseitigen Mitteln handelt es sich um Programmbausteine zur Durchführung des erfindungsgemäßen Verfahrens.

## Patentansprüche

1. Verfahren zum Betreiben eines als Dual-Fuel-Motor ausgebildeten Motors, der mehrere Zylinder (2) umfasst,
wobei in einem Flüssigkraftstoffbetriebsmodus ein flüssiger Kraftstoff wie Diesel in einen Brennraum (9) des jeweiligen Zylinders (2) eingebracht wird,
wobei in einem Gaskraftstoffbetriebsmodus ein Gas/Luft-Gemisch aus einem gasförmigen Kraftstoff und Luft und zur Zündung des Gas/Luft-Gemischs ein Zündfluid in den Brennraum (9) des jeweiligen Zylinders (2) eingebracht wird,
wobei in dem Gaskraftstoffbetriebsmodus im Bereich jedes Zylinders (2) in einem Arbeitstakt desselben zuerst der gasförmige Kraftstoff und die Luft des Gas/Luft-Gemischs und anschließend das Zündfluid in den jeweiligen Zylinder (2) in mindestens zwei aufeinanderfolgenden Einspritzungen in den Brennraum (9) des jeweiligen Zylinders (2) eingebracht wird,
**dadurch gekennzeichnet, dass**
im Bereich jedes Zylinders (2) in dem Flüssigkraftstoffbetriebsmodus der flüssige Kraftstoff und in dem Gaskraftstoffbetriebsmodus das Zündfluid über denselben Kraftstoffinjektor (6) des jeweiligen Zylinders (2) in den Brennraum (9) des jeweiligen Zylinders (2) eingebracht wird.

2. Verfahren nach Anspruch 1, **dadurch gekennzeichnet, dass** im Flüssigkraftstoffbetriebsmodus in dem jeweiligen Arbeitstakt des jeweiligen Zylinders (2) bei Volllast des Motors über den Kraftstoffinjektor (6) des jeweiligen Zylinders (2) eine Menge von 100% flüssigem Kraftstoff in den Brennraum (9) des jeweiligen Zylinders (2) eingebracht wird.

3. Verfahren nach Anspruch 1 oder 2, **dadurch gekennzeichnet, dass** im Gaskraftstoffbetriebsmodus in dem jeweiligen Arbeitstakt des jeweiligen Zylinders (2) über den Kraftstoffinjektor (6) des jeweiligen Zylinders (2) eine Menge von 0,7%-3%, bevorzugt eine Menge von 1,0%-2,5%, besonders bevorzugt eine Menge von 1,5%-2,0%, flüssigem Kraftstoff als Zündfluid in den Brennraum (3) des jeweiligen Zylinders (2) eingebracht wird.

4. Verfahren nach einem der Ansprüche 1 bis 3, **dadurch gekennzeichnet, dass** im Gaskraftstoffbetriebsmodus in dem jeweiligen Arbeitstakt des jeweiligen Zylinders (2) das Zündfluid in einer ersten Einspritzung mit einem ersten Einspritzbeginn, der in einem Kurbelwellenwinkelbereich zwischen 180°KW vor OT und 60°KW vor OT liegt, in den jeweiligen Zylinder (2) eingebracht wird.

5. Verfahren nach einem der Ansprüche 1 bis 4, **dadurch gekennzeichnet, dass** im Gaskraftstoffbetriebsmodus in dem jeweiligen Arbeitstakt des jeweiligen Zylinders (2) das Zündfluid in einer zweiten Einspritzung mit einem zweiten Einspritzbeginn, der in einem Kurbelwellenwinkelbereich zwischen 40°KW vor OT und 10°KW vor OT liegt, in den jeweiligen Zylinder (2) eingebracht wird, wobei der zweite Einspritzbeginn der zweiten Einspritzung nach einem ersten Einspritzende der ersten Einspritzung liegt.

6. Verfahren nach einem der Ansprüche 1 bis 5, **dadurch gekennzeichnet, dass** im Gaskraftstoffbetriebsmodus eine Einspritzmenge an Zündfluid in dem jeweiligen Arbeitstakt des jeweiligen Zylinders (2) derart zwischen den Einspritzungen verteilt wird, dass bei der ersten Einspritzung für das Zündfluid zwischen 70% und 40% und bei der zweiten Einspritzung für das Zündfluid zwischen 30% und 60% der Gesamteinspritzmenge an Zündfluid für den jeweiligen Arbeitstakt in den jeweiligen Zylinder (2) eingebracht wird.

7. Steuerungseinrichtung eines Motors, **gekennzeichnet durch** Mittel zur Durchführung des Verfahrens nach einem der Ansprüche 1 bis 6.
